# EUROPEAN PATENT APPLICATION

(11) **EP 4 687 240 A1**
(43) Date of publication of application: **04.02.2026**
(21) Application number: 24192677.3
(22) Date of filing: 02.08.2024
(51) Int. Cl.: H02G 5/06, F16K 15/06, F16K 17/04

(54) **OVERPRESSURE RELIEF DEVICE FOR SWITCHGEAR**

(71) Applicant: GE Vernova Technology GmbH, 5400 Baden (CH)
(72) Inventor: GERBER, Philip, 5036 Oberentfelden- Arargau (CH); TREIER, Lukas, 5036 Oberentfelden- Arargau (CH)
(74) Representative: Rüger Abel Patentanwälte PartGmbB

(57) **Abstract**

The invention relates to a safety valve for a pressure barrier plate (7) of a gas insulated switchgear, comprising a longitudinal sleeve (2) extending along an axis (AA') and having a 1^{st} end (23) and a 2^{rd} end (25), a pin (1) extending in said sleeve between a 1^{st} end (11) and a 2^{nd} end (13), said 1^{st} end (11) of said pin bearing a 1^{st} end cap (10), said 2^{nd} end (13) of said pin bearing a 2^{nd} end cap (3), a 1^{st} compression spring (4) in a 1^{st} compartment (28) inside said sleeve, a 2^{nd} compression spring (5) in a 2^{nd} compartment (29) inside said sleeve, said 1^{st} spring (4) and said 2^{nd} spring (5) respectively pushing said 2^{nd} end cap (3) and said 1^{st} end cap (10) towards opposite directions along said axis (AA').

## Description

### TECHNICAL FIELD AND PRIOR ART

The invention concerns an overpressure safety valve for pressure barrier plates in a switchgear.

In a switchgear, barrier plates are usually mounted between two metallic flanges (a flange and a counter flange). In this configuration they can withstand the design pressure. During assembly and transportation, a barrier plate can be used mounted on one flange without the counter flange. That leads to a significantly reduced pressure withstand capability. In this transport configuration, the allowed maximum pressure is defined by design. If for some reasons, too much pressure is applied, which is not a normal process but may happen due to some mis-manipulation, the barrier plate could be damaged.

A prior art solution makes use of an additional flange ring to hold the plate, so that the plate can maintain a full design pressure. This flange ring has huge negative impact on the layouts of the switchgear and costs. Indeed, this additional ring is mounted on the flange, the barrier plate being held between said flange and the additional ring. A second flange then comes on top. Such an additional ring is expensive and has a direct impact on the dimensions in the substation layout.

There is thus a need for a new method and a new device for ensuring tightness and/or mechanical withstand of a pressure barrier plate of a switchgear during transportation of said switchgear.

### PRESENTATION OF THE INVENTION

The present invention first concerns a safety valve for a pressure barrier plate of a gas insulated switchgear, comprising a longitudinal sleeve extending along an axis (AA') and having a 1^{st} end and a 2^{nd} end, a pin extending in said sleeve between the 1^{st} end and the 2^{nd} end, said 1^{st} end of said pin bearing a 1^{st} end cap, said 2^{nd} end of said pin bearing a 2^{nd} end cap, a 1^{st} compression spring in a 1^{st} compartment inside said sleeve, compression means, for example a 2^{nd} compression spring or an O-ring, in a 2^{nd} compartment inside said sleeve, said 1^{st} spring and said compression means respectively pushing said 2^{nd} end cap and said 1^{st} end cap towards opposite directions along said axis (AA').

The invention is safer than the prior solution with similar cost.

The invention is non-destructive (parts cannot be damaged by overpressure events and parts cannot be damaged in the transportation process of the gas insulated switchgear) and does not need any additional work on the different parts after an overpressure is applied.

The invention prevents potential damage on parts due to mis-manipulation.

A safety valve according to the invention can comprise an internal wall of the sleeve, perpendicular to said axis (AA'), separating the internal volume of the sleeve in said 1^{st} and 2^{nd} compartments.

In a safety valve according to the invention, said 1^{st} end cap can:
- have a 1^{st} part which has a 1^{st} diameter (D1), equal to an internal diameter of said 1^{st} end of said sleeve and a 2^{nd} part which has a 2^{nd} diameter (D2), larger than D1. Said 1^{st} part of said 1^{st} end cap can fit into said 1^{st} end of the sleeve;
- and/or can further comprise a throat to receive an O-ring or a sealing gasket, which is compressed between said 1^{st} part of cap and an internal wall of said sleeve.

In a safety valve according to the invention, said 1^{st} end cap and/or 2^{nd} end cap can extend outside said sleeve.

The invention also concerns a pressure barrier plate comprising at least one safety valve according to the invention.

The invention also concerns a gas insulated switchgear comprising a pressure barrier plate according to the invention, wherein the bottom of said safety valve faces a 1^{st} flange delimiting a 1^{st} insulation gas compartment. An internal side housing of said 1^{st} flange can be delimited by an internal lip, receiving a bottom end of the barrier plate.

In a gas insulated switchgear according to the invention, the top of said safety valve can face a 2^{nd} flange delimiting a 2^{nd} insulation gas compartment, the safety valve being blocked on both sides by flanges. An internal side housing of said 2^{nd} flange can be delimited by an internal lip, receiving an upper end of the barrier plate.

The invention also concerns a method for transporting a gas insulated switchgear according to the invention as described above and in the other parts of this application, comprising:
- removing said 2^{nd} flange;
- transporting said gas insulated switchgear from one location to another location, the safety valve acting as an overpressure safety valve for said 1^{st} insulation gas compartment;
- mounting said 2^{nd} flange again on said gas insulated switchgear.

In a method according to the invention:
- under a certain predefined pressure inside said 1^{st} insulation gas compartment, said 1^{st} compression spring can remain in its initial state, the sealing gasket staying in place between said 1^{st} end cap and said sleeve;
- and/or above said predefined pressure in said 1^{st} insulation gas compartment, said 1^{st} compression spring can be compressed and said compression means, for example said 2^{nd} compression spring or said O-ring, can expand, so that the pin moves together with its 1^{st} end cap, the insulating gas inside said gas compartment flowing to outside atmosphere, the pressure in said gas compartment being reduced. The compression means, for example the 2nd compression spring or the O-Ring, is not needed for the valve to function, instead it ensures electrical connection between the 1st part and the 2nd flange when the counter flange is mounted.

In a method according to the invention, when the pressure in said 1^{st} insulation gas compartment is reduced, the compression means, for example the 2^{nd} compression spring or the O-Ring, can be compressed and the 1^{st} compression spring can expand and push said 2^{nd} end cap towards said gas compartment, thereby moving said 2^{nd} end cap back to its original position.

After having mounting said 2^{nd} flange again on said gas insulated switchgear, the valve is blocked and prevents undesired gas releases from one compartment into another.

### BRIEF DESCRIPTION OF THE DRAWINGS

- Figure 1 shows an embodiment of a safety valve according to the invention in a transportation arrangement;
- Figure 2 shows an embodiment of a safety valve according to the invention in an operation arrangement;

### DETAILED PRESENTATION OF PARTICULAR EMBODIMENTS

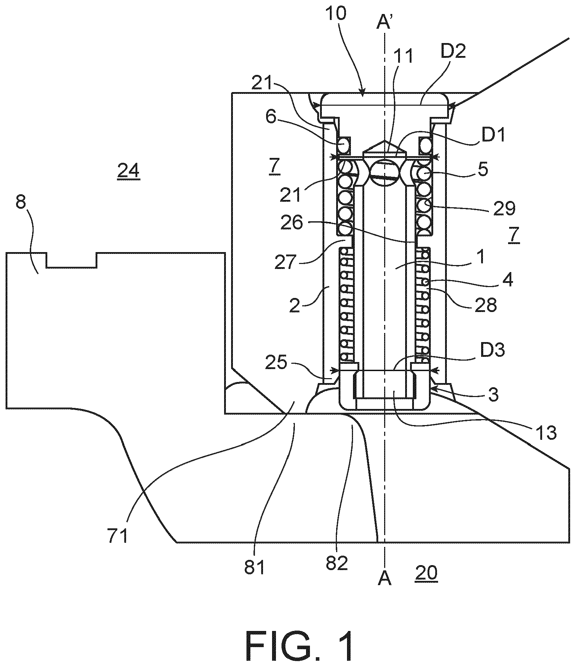

A safety valve according to the invention is illustrated on figure 1 in a transportation arrangement.

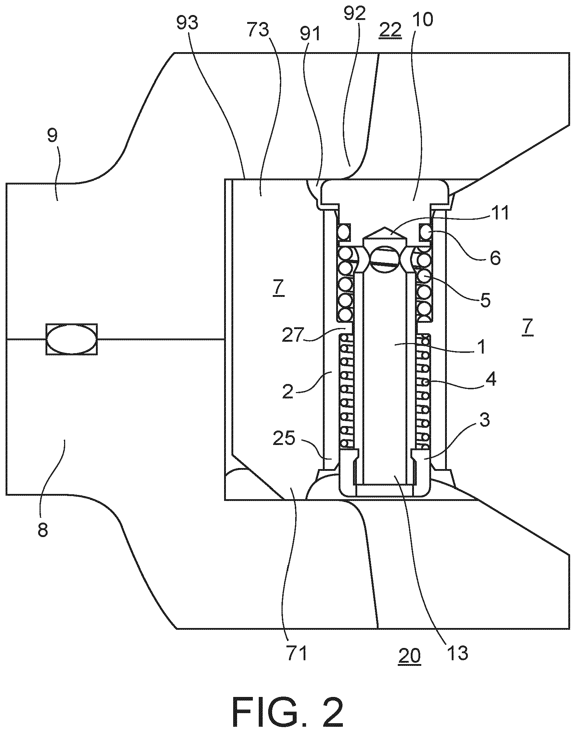

It comprises a longitudinal sleeve 2 extending along an axis AA'. An axial pin 1 extends inside said sleeve, along said axis AA', between a 1^{st} end 23 (see also figure 2), or upper end, of said sleeve and a 2^{nd} end 25, or lower end, of said sleeve.

A 1^{st} end 11, or upper end, of said pin, forms, or is terminated by, a 1^{st} cap 10 (the cap 10 and the body 1 of the pin can form a single piece). Said cap has a 1^{st} part which has a 1^{st} diameter D1, so that said 1^{st} part fits into the 1^{st} end 23 (for example D1 is equal to the internal diameter of the 1^{st} end 23) of said sleeve 2 and a 2^{nd} part which has a 2^{nd} diameter D2, larger than D1. The 1^{st} part further comprises a throat to receive an O-ring or a sealing gasket 6, which is compressed between said 1^{st} part of cap 10 and the internal wall 21 of said sleeve. The 2^{nd} part of the cap 10 extends outside the sleeve 2. Alternatively sealing can be performed by an axial sealing member.

A 2^{nd} end 13, or lower end, of said pin, forms, or is terminated by, a 2^{nd} cap 3, for example a nut, which can have a single outside diameter D3 so that it fits into the 2^{nd} end of 25 the sleeve 2 (for example D3 is equal to the internal diameter of said sleeve 2). In the transportation arrangement of figure 1, part of the cap 3 can extend outside the sleeve 2.

An internal wall 27 of the sleeve, perpendicular to its axis (AA'), divides the internal volume of the sleeve in 2 compartments 28, 29, each housing a spring 4 (a so-called counter spring), 5 (a so-called contact spring), preferably compression springs; in variant, an O-ring, more generally compression means, can be used instead of contact spring 5. The contact function can be optional depending on the earthing of the valve and whether there is a need for earthing. The pin 1 passes through a hole 26 of said wall 27.

The sleeve, comprising its housing and the springs 4, 5 is in a hole of an insulating barrier plate 7 (or partition or support insulator) between an insulation gas compartment 20 in a pressure vessel 8 and the outside atmosphere 24 (usually air). An internal side housing 81 of said flange, delimited by an internal lip 82, receives a bottom end 71 of the barrier plate 7.

The spring 4 is in compression between the wall 27 and the 2^{nd} cap 3 which is pressed by the pressure of the gas inside said gas compartment 20.

The compression means, for example a spring 5, ares in compression between the wall 27 and the 1^{st} cap 10.

In the configuration of figure 1 the valve acts as an overpressure safety valve for the gas compartment 20. Under a certain predefined pressure (the pressure difference between both sides of the barrier plate 7) inside compartment 20, the spring 4 remains in its initial state, thus making sure the sealing gasket 6 stays properly in place between cap 10 and sleeve 2.

Above said predefined pressure in gas compartment 20, the counter spring 4 will be compressed and spring 5 will expand, so that the pin will move upwards together with its 1^{st} cap 10 and with gasket 6, which finally will lose contact with sleeve 2.

At this point the insulating gas inside gas compartment 20 will flow to outside atmosphere 24 and the pressure in gas compartment 20 will be reduced.

If the pressure in gas compartment 20 is then reduced below a predefined pressure, the spring 5 can again be compressed and the spring 4 can expand again and can push the 2^{nd} cap 3 towards gas compartment 20, thereby moving the 1^{st} cap 10 and the gasket 6 back to their original position: the gas compartment 20 is sealed again from the outside atmosphere 24.

On figure 2 (operation arrangement) the same insulating barrier plate 7 forms an insulation between insulation gas compartment 20 in pressure vessel 8 and another insulation gas compartment 22 in pressure vessel 9 (which is assembled with pressure vessel 8). A portion or a lip 91 of flange 9 blocks the 1^{st} end 10 of pin 1. A side housing 93 of said flange 9, delimited by an internal lip 92, receives an upper end 73 of the barrier plate 7.

The valve is thus blocked or is prevented from moving on both sides by the flange 8, 9 of each pressure vessel, more precisely by lips 81, 91 in the embodiment illustrated on figures 1 and 2. It thus forms a separation or a partition between the 2 insulation gas compartments 20, 22.

According to the invention, the valve is blocked by the 2 flanges 8, 9 and is only functional when only one (bottom) flange 8 is applied, as explained above in the transportation arrangement.

Thus, a valve according to the invention relieves the overpressure in the transport configuration (figure 1) while remaining tight in the configuration where it is mounted between two flanges 8, 9 (figure 2).

A plurality of valves according to the invention can be used in a same barrier plate 7.

## Claims

1. A safety valve for a pressure barrier plate (7) of a gas insulated switchgear, comprising a longitudinal sleeve (2) extending along an axis (AA') and having a 1^{st} end (23) and a 2^{nd} end (25), a pin (1) extending in said sleeve between a 1^{st} end (11) and a 2^{nd} end (13), said 1^{st} end (11) of said pin bearing a 1^{st} end cap (10), said 2^{nd} end (13) of said pin bearing a 2^{nd} end cap (3), a 1^{st} compression spring (4) in a 1^{st} compartment (28) inside said sleeve, a 2^{nd} compression spring (5) in a 2^{nd} compartment (29) inside said sleeve, said 1^{st} spring (4) and said 2^{nd} spring (5) respectively pushing said 2^{nd} end cap (3) and said 1^{st} end cap (10) towards opposite directions along said axis (AA').

2. - A safety valve according to claim 1, an internal wall (27) of the sleeve, perpendicular to said axis (AA'), separating the internal volume of the sleeve in said 1^{st} compartment (28) and in said 2^{nd} compartment (29).

3. - A safety valve according to claim 1 or 2, said 1^{st} end cap (10) having at least a 1^{st} part which has a 1^{st} diameter (D1) so that it fits into said 1^{st} end (23) of the sleeve (2).

4. A safety valve according to claim 3, wherein said 1^{st} end cap (10) has a 2^{nd} diameter (D2), larger than D1.

5. A safety valve according to claim 3 or 4, said 1^{st} part of said 1^{st} end cap (10) further comprising a throat to receive an O-ring or a sealing gasket (6), which is compressed between said 1^{st} part of cap (10) and an internal wall (21) of said sleeve (2).

6. A safety valve according to any of claims 1 to 4, said 1^{st} end cap (10) and/or 2^{nd} end cap (3) being able to extend outside said sleeve (2).

7. - A pressure barrier plate (7) comprising at least one safety valve according to any of claims 1 to 6.

8. - A gas insulated switchgear comprising a pressure barrier plate (7) according to claim 7, the bottom of said safety valve facing a 1^{st} flange (8) delimiting a 1^{st} insulation gas compartment (20).

9. - A gas insulated switchgear according to claim 8, an internal side housing (81) of said 1^{st} flange (8), delimited by an internal lip (82), receiving a bottom end (71) of the barrier plate (7).

10. - A gas insulated switchgear according to claim 8 or 9, the top of said safety valve facing a 2^{nd} flange (9) delimiting a 2^{nd} insulation gas compartment (22), the safety valve being blocked on both sides by flanges (8, 9).

11. - A gas insulated switchgear according to claim 10, an internal side housing (91) of said 2^{nd} flange (9), delimited by an internal lip (92), receiving an upper end (73) of the barrier plate (7).

12. A method for transporting a gas insulated switchgear according to any of claims 10 or 11, comprising:
- removing said 2^{nd} flange (9);
- transporting said gas insulated switchgear from one location to another location, the safety valve acting as an overpressure safety valve for said 1^{st} insulation gas compartment (20);
- mounting said 2^{nd} flange (9) again on said gas insulated switchgear.

13. A method according to claim 12, whereby:
- under a certain predefined pressure inside said 1^{st} insulation gas compartment (20), said 1^{st} compression spring (4) remains in its initial state, the sealing gasket (6) staying in place between said 1^{st} end cap (10) and said sleeve (2);
- above said predefined pressure in said 1^{st} insulation gas compartment (20), said 1^{st} compression spring (4) is compressed and said 2^{nd} compression spring (5) expands, so that the pin moves together with its 1^{st} end cap (10), the insulating gas inside said gas compartment (20) flowing to outside atmosphere (24) and the pressure in said gas compartment (20) being reduced.

14. A method according to claim 13, whereby when the pressure in said gas compartment (20) is reduced, the 2^{nd} compression spring (5) is compressed and the 1^{st} compression spring (4) expands and pushes said 2^{nd} end cap (3) towards gas compartment (20), thereby moving said 1^{st} end cap (10) back to its original position.
